# EUROPEAN PATENT APPLICATION

(11) **EP 2 570 674 A1**
(43) Date of publication of application: **20.03.2013**
(21) Application number: 11181465.3
(22) Date of filing: 15.09.2011
(51) Int. Cl.: F04D 7/04, F04D 29/02, F04D 29/22, F04D 29/28, F01D 5/28

(54) **Erosion resistant impeller vane made of metallic laminate**

(71) Applicant: Sandvik Intellectual Property AB, 811 81 Sandviken (SE)
(72) Inventor: Berglund, Tomas, SE-791 93 FALUN (SE)

(57) **Abstract**

The invention relates to an impeller vane (10) having a leading edge (11) and a trailing edge (12) wherein said vane (10) comprises at least a first metallic core material and at least a first wear resistant material, wherein the hardness of said at least first wear resistant material exceeds the hardness of said at least first metallic core material. According to the invention, said impeller vane (10) consists of a plurality of layers of said at least first metallic core material (2) and said at least first wear resistant material (3), wherein said layers (2, 3) extend from the leading edge (11) to the trailing edge (12) of the impeller and are arranged alternating throughout the cross section of the vane (10).

The invention further relates to an impeller comprising at least one inventive impeller vane. The invention also relates to a method for manufacture an impeller vane and an impeller.

## Description

### TECHNICAL FIELD

The present invention relates to an impeller vane according to the preamble of claim 1. The present invention also relates to an impeller comprising at least one inventive impeller vane. The invention also relates to a method for manufacturing the inventive impeller vane and to a method for manufacturing an impeller comprising at least one inventive impeller vane.

### BACKGROUND

The vanes of impellers that are used in various types of pumping devices are subjected to wear from particles suspended in the liquid or gas that is pumped. Especially the vanes of impellers in slurry pumps are subjected to extensive wear. In operation, an impeller vane may be used until approximately 50 percent of the length of the impeller has been consumed. Thereafter the impeller vane must be replaced.

In order to increase wear resistance, conventional, wear resistant, impeller vanes typically consist of a steel core that is selected so that the impeller vane is provided with desired mechanical properties. The core is coated with a cladding of a hard, wear resistant material. The leading edge of the impeller vane is subjected the heaviest wear and is therefore typically provided with a thicker cladding than the rest of the impeller. US2010/0272563 A1 shows a conventional impeller vane.

However, although the outer cladding provides some wear resistance and initially prolongs the life time of the vane the conventional vanes still suffers from relatively short life time in extreme conditions.

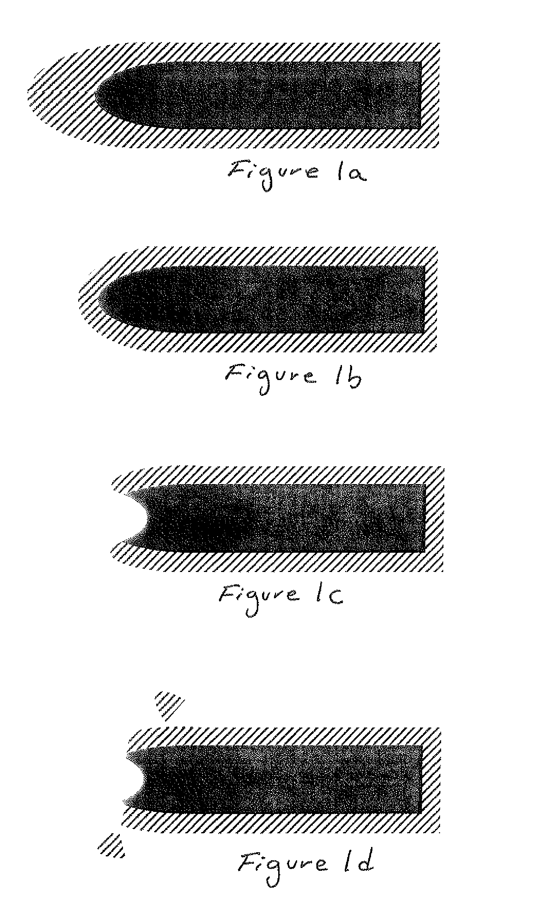

Figures 1a ― 1d shows the general wear mechanism of a conventional impeller vane having a steel core and an outer wear resistant cladding. Figure 1 a shows an unused impeller vane in cross-section. After some use, see figure 1 b the leading edge of the vane is significantly worn. When the hard coating of the vane is completely worn down, the soft steel core is uncovered and wear of the vane accelerates, figure 1 c. As the steel core deteriorates, the outer hard and brittle cladding loses its support and start to crack and fall of in large pieces, figure 1 d. This causes the wear of the vane to accelerate even more. Hence, in conventional vanes, the wear rate is initially rather slow but accelerates significantly over time so that the total life time of the vane is short.

Hence, it is an object of the present invention to achieve an impeller vane that has increased life time.

### SUMMARY OF THE INVENTION

According to the invention this object is achieved by an impeller vane having a leading edge and a trailing edge wherein said vane comprises at least a first metallic core material and at least a first wear resistant material, wherein the hardness of said at least first wear resistant material exceeds the hardness of said at least first metallic core material, characterized in that said impeller vane consists of a plurality of layers of said at least first metallic core material and of said at least first wear resistant material, wherein said layers extend from the leading edge to the trailing edge of the impeller and are arranged alternating throughout the cross section of the vane.

In the inventive impeller vane, the laminate design of alternating hard, wear resistant layers and softer metallic core layers that extends over the length of the vane provides for the same wear resistance over the entire length of the vane and hence a constant wear rate of the vane. This increases the total life time of the impeller in comparison with conventional impeller vanes in which the major life time limiting wear occurs at the tip of the leading edge of the vane.

A further advantage of the inventive impeller is that it has high resistance against impact with larger objects since the ductile layers of said at least first metallic core material prevents crack growth between the layers of the vane.

The mechanical properties, i.e. the strength and toughness of the inventive vane are determined by the combination of the properties of the first metallic core material and the first wear resistant material. These materials may be selected by the skilled person in dependency of the desired mechanical properties of the vane and the conditions in which the vane is used. However, the hardness of the wear resistant material should be higher than the hardness of the first metallic material and the ductility and/or toughness of the first metallic core material should be higher than the ductility and/or toughness of the wear resistant layer. Preferably, the first metallic core material is less brittle and has a higher impact strength than the wear resistant material.

The wear rate of the inventive impeller vane is generally determined by the properties of the wear resistant layer and the thickness of the metallic core layers and the wear resistant layers in the laminate structure. Generally, a vane with a high number of thin layers provides a better wear resistance, i.e. a lower wear rate, than a vane with few thick layers. On the other hand, a vane having a large number of thin layers implies higher production costs, therefore it is preferred to adopt the number and the thickness of the layers in relation to the conditions the vane is used in. These conditions are typically flow rate, particle size, particle hardness and number of particles in the liquid or slurry. It is preferred to have many thin layers of the first metallic core material if it the vane is used in conditions with high flow rates and/or small size particles.

By "plurality of layers" is meant that the impeller vane comprises at least 5 alternating layers.

The term "first metallic core material" has been selected in order to clarify that this is a material of different properties than the material that is denominated "first wear resistant material"

Preferably, the layers of said at least first metallic core material have a thickness of 5 mm or less, preferably 3 mm or less, more preferred 2 mm or less.

Preferably, the layers of said at least first wear resistant material have a thickness of 15 mm or less, preferably 10 mm or less, more preferred 2 mm or less.

Preferably, said impeller vane consists of at least 5 layers, preferably at least 20 layers, more preferred at least 70 layers.

The impeller vane may comprise layers of further metallic core materials and/or layers of further wear resistant materials.

Said at least first metallic core material is selected from the group consisting of nickel-base alloys, low carbon cobalt-base alloys and iron-base alloys. Low carbon cobalt-base alloys are referred to as such alloys having a carbon content of 0.5 wt% or less.

Said at least first wear resistant material is selected from the group consisting of cemented carbide, high carbon cobalt-base alloys and metal matrix composite. High carbon cobalt-base alloys are referred to as such alloys having a carbon content of 1.0 wt% or more.

The invention further relates to an impeller comprising at least one impeller vane according to the invention.

The invention further relates to a method for manufacturing an inventive impeller vane according to the invention, the method comprises the steps of:
- alternating arranging a plurality of layers of at least a first metallic material and a at least a first wear resistant material;
- forming said layers to an impeller vane preform;
- subjecting said impeller vane preform to a High Isostatic Pressure-process (HIP) for a predetermined time at a predetermined pressure and predetermined temperature so that the layers of said at least first metallic material and said at least first wear resistant material bond metallurgically. This process takes place without formation of any melt phases.

The invention further relates to a method for manufacturing an impeller comprising an impeller vane according to the invention, the method comprises the steps of
- alternating arranging a plurality of layers of at least a first metallic material and at least a first wear resistant material;
- forming said layers to at least one impeller vane preform;
- providing a front impeller disc and a rear impeller disc;
- metallurgically bonding, in a High Isostatic Pressure-process (HIP), the layers of said at least first metallic core material and said at first wear resistant material of said at least one vane preform to each other and to the front impeller disc and a rear impeller disc;

According to a first alternative, the front impeller disc and the rear impeller disc are pre-manufactured.

According to a second alternative, the method comprises the steps of:
- arranging said at least one vane preform in a capsule that defines the shape of the front impeller disc and a rear impeller disc;
- filling said capsule with metallic powder;
- metallurgically bonding, in a High Isostatic Pressure-process (HIP), said metallic powder in the capsule into an impeller front disc and an impeller rear disc and simultaneously,
- metallurgically bonding said first metallic core material and said first wear resistant material of said at least one vane preform to each other and to the front impeller disc and a rear impeller disc;

### DESCRIPTION OF DRAWINGS

Figure 1 a-1 d: Schematic cross-sectional drawings of the wear mechanism of a prior art impeller vane.
Figure 2: Schematic perspective front view of an impeller comprising several inventive impeller vanes.
Figure 3: Schematic perspective side view of the impeller in figure 2.
Figure 4: Schematic front view of a cross section through the impeller in figure 2.
Figure 5: Schematic perspective view of an impeller vane according to a first embodiment of the invention.
Figure 6: Schematic drawing of a cross-section through an impeller vane according to a first preferred embodiment.
Figure 7: Schematic drawing explaining the wear resistant mechanism in the inventive vane.

### DESCRIPTION OF EMBODIMENTS

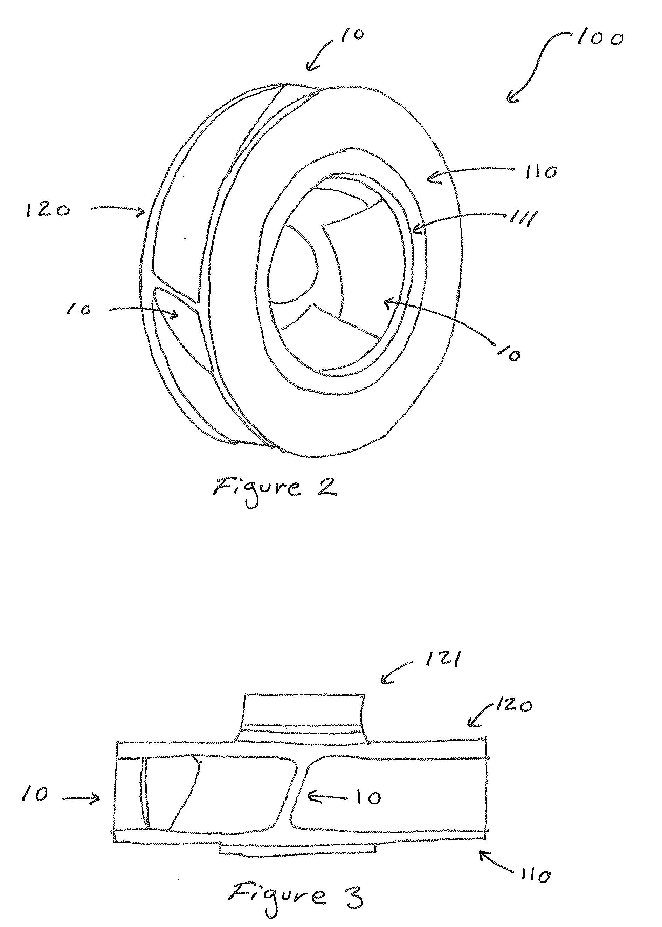

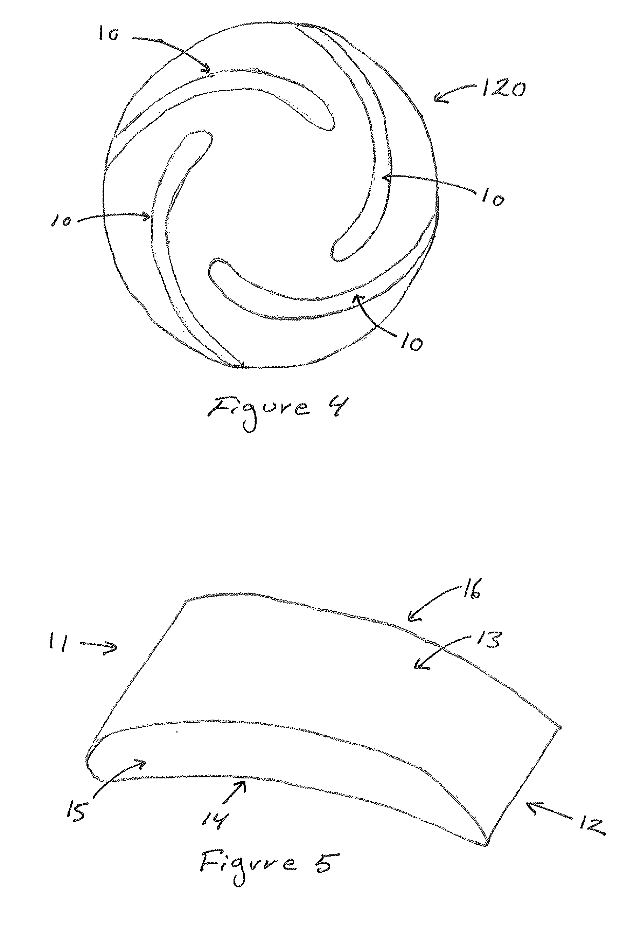

Figure 2 shows schematically a perspective front view of an impeller 100 that may be used in any type of suitable pumping device e.g. a centrifugal pump such as a slurry pump or a submersible pump. The impeller 100 comprises a first front disc 110 and a rear disc 120 which are manufactured from steel material. The front disc 110 has a central, circular opening 111 for sucking in liquid into the impeller. The rear disc 120, see figure 3, has an attachment 121 for attaching the impeller to the driving shaft of a pump motor (not shown). The impeller further comprises four impeller vanes 10 which are partially shown in figure 2.In Figure 4 which is a cross-section through the impeller in figure 2, are all four vanes visible. Figure 5 shows schematically an impeller vane 10 in detail. The impeller vane 10 has a curved form and has a forward leading edge 11 and a rear trailing edge 12. The impeller further comprises an upper surface 13 and a lower surface 14 which extend between the leading and trailing edges of the vane. The vane further comprises a first side surface 15 and a second side surface 16 which extend between the leading and trailing edges, perpendicular to the upper surface 13 and the lower surface 14. The second side surface 16 and the lower surface 14 are not visible in figure 5. It is obvious that the impeller vane and impeller discs could have any other shape than the one described in figure 5. For example, the impeller could be flat or have a concave or convex shape along a longitudinal axis between its leading and trailing edges.

The impeller vane 10 is attached to the inner surfaces of the impeller front and rear discs 110, 120. This could be done in a number of different ways. The vanes and discs could be metallurgically bonded to each other, for example in a HIP process. The vanes could also be integrated in the impeller discs during casting of the discs. The vanes could also be releasable attached to the discs by fastening means such as screws. As can be seen in figure 4, the vanes are arranged such that the leading edges 11 are close to the centre of the impeller discs and the trailing edge is close to the outer periphery of the impeller discs. However, Instead of attaching the side surfaces if the vane to the impeller discs, the trailing edge could be attached to a hub in the centre of the impeller discs (not shown).

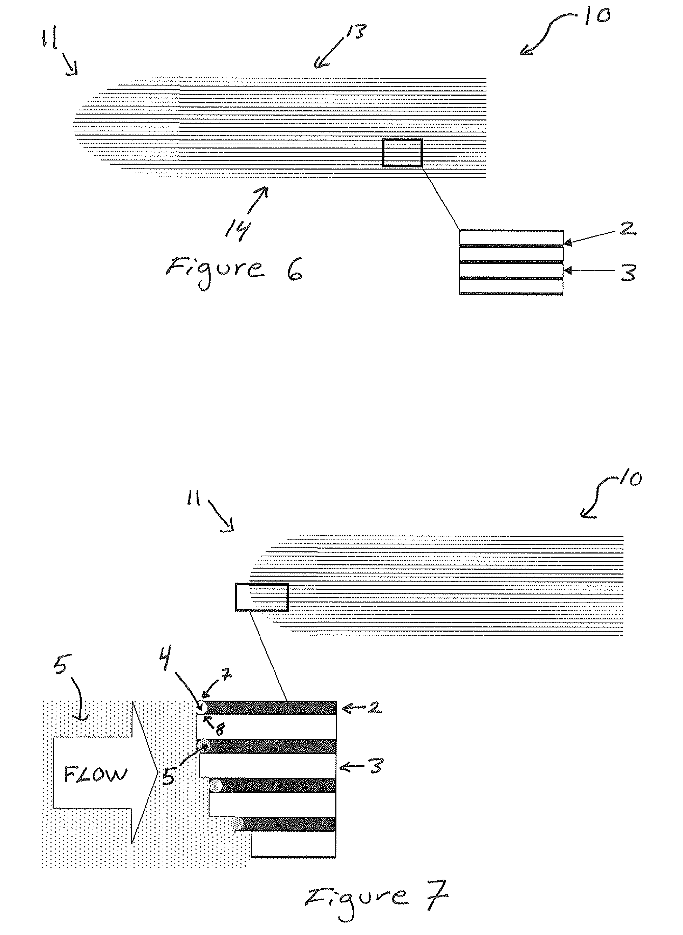

Figure 6 shows a cross-section through an impeller vane 10 according to a first preferred embodiment of the invention. For simplicity reasons the impeller vane of figure 6 has been illustrated schematically in a straight form, however it has the same curved shape as the impeller vane of figure 5. As can be seen in figure 6, see especially the closed up section, the inventive impeller vane consists of several layers of at least a first metallic core material 2 and several layers of at least a first wear resistant material 3.

The metallic core material 2 and the wear resistant material 3 are selected such that the metallic core material 2 has a higher ductility and/or toughness than the wear resistant material 3 whereas the hardness of the wear resistant material 3 is higher than the hardness of the metallic core material 2. It is of course possible to use layers of further metallic core materials and layers of further wear resistant materials in the vane. This is advantageous for optimizing strength and wear resistance of the vane.

In particular, different layers of metallic core materials may differ with regard to the composition thereof. Thereby may different mechanical and physical properties be achieved in different metallic core layers. However, the material of each such core layer still differs with regard to its physical and mechanical properties from the wear resistant layers as defined earlier. Also the layers of wear resistant material may differ with regard to the composition thereof.

For example, layers of a first metallic core material may be arranged in the upper portion of the vane and layers of a second metallic core material, i.e. having a composition different from the first metallic core material, may be arranged in the lower portion of the vane. Likewise is it possible to arrange layers of a first wear resistant material in the centre of the vane and layers of a second wear resistant material in the upper and lower portions of the vane. However, the hardness of the both different types of wear resistant layers should be higher than the hardness of both different types of metallic core materials.

In the present embodiment the metallic core material is carbon steel and the wear resistant material is a MMC (Metal Matrix Composite) of high-speed steel and TiC. However, other metallic core materials and the wear resistant materials may be selected for achieving desired mechanical properties and wear resistance in the vane. Preferably, the metallic core materials may be selected from the group of nickel based alloys, cobalt based alloys having low carbon content and iron based alloys, such as stainless steel. These materials are suitable since they have high toughness and good resistance to corrosion. The wear resistant material may be selected from the group consisting of cemented carbide, cobalt alloys having high carbon content, MMC i.e. a composite of carbides, borides or nitrides of e.g. W, Ti, Ta, Cr, V, Mo in a metal matrix such as Ni-, Co-, and Fe-based alloys.

The layers of metallic core material 2 and the layers of wear resistant material 3 are arranged alternating. Hence, a layer of metallic core material 2 is arranged on top of a layer of wear resistant material 3 and on top of the layer of metallic core material 2 is arranged a layer of wear resistant material 3 and so on.

Each layer 2, 3 extends from the first side surface 15 of the impeller vane to the second side surface 16 and from the leading edge 11 to the trailing edge 12. Each of the edges to each layer 2, 3 coincides with the leading edge, the trailing edge and the side surfaces of the vane. A first bottom layer, constitutes the lower surface 14 of the vane and a final top layer, constitutes the upper surface 13 of the vane. Thus, the whole vane consists of a laminate structure of alternating layers of wear resistant material 3 and metallic core material 2. Thus, the entire cross-section of the vane consists of alternating layers.

The layers are preferably coherent layers i.e. sheets of films that have a constant thickness over their entire length and width. Thereby a constant wear rate is achieved.

In order to tailor the wear resistance of the vane some layers in the vane could be in the form of a net or perforated sheet.

The first bottom layer and the final top layer, forming opposite outermost layers in the vane, could be either a layer of wear resistant material 3 or a layer of metallic core material 2. If the uppermost and lowermost layers are of wear resistant material, high wear resistance is achieved on the outer surfaces of the vane. It could however be advantageous to arrange layers of metallic core material 2 as outermost layers since these layers can be welded to the impeller discs or a HIP-capsule and hence facilitates the manufacturing process of the entire impeller.

The total number of layers in the vane and the thickness of each layer can be varied. For example is it possible that the wear resistant layers are thicker than the layers of metallic material. The advantage thereof is that a large surface area of the leading edge of the vane will be constituted by wear resistant material and hence increases the total wear resistance of the vane. The thickness of the wear resistant layers should preferably be selected so that at least 50% of the volume of the vane is constituted of wear resistant material.

It is also possible to vary the thickness of specific layers over the cross-section of the vane in order to optimize wear resistance and mechanical properties of the vane. For example, higher flexibility could be achieved in the upper and lower portions of the vane by arranging thick metallic core layers there. Higher wear resistance could be achieved in the middle portion of the vane by increasing the thickness of the wear resistant layers 3 in that portion of the vane.

As stated above, the total number of layers in the inventive vane as well as the thickness of the respective layers may be adopted in dependency of the conditions in the application the vane should be used in. However, it has shown that an impeller vane in which the thickness of the metallic layers is less than 5 mm provides a very long life length, i.e. low wear rate. The reason for this is believed to be the following:

Typically the particles in slurry, are dispersed over a large range of different particle sizes. With reference to figure 7, when an inventive vane is used to pump slurry, the layers of the metallic core material 2 in the leading edge 11 of the vane are initially subjected to wear so that small, shallow, cavities 4 are formed that extend along the leading edge 11 of the vane. The cavities 4 are open towards the leading edge 11 of the vane and their bottoms 6 have a concave form in the layer of metallic core material 2. The walls 7, 8 of the cavities 4 are constituted by the surrounding layers of wear resistant material 3. Small particles 5 in the slurry are trapped in the shallow cavities. The small particles 5 fill the cavities 4 and form a buffer which prevents, or at least retards, further wear to the underlying metallic core material 2. The protective effect increases with decreasing thickness of the metallic layer, probably due to slower flow conditions in the cavities 4. Therefore, the thickness of the metallic core material 2 should preferably be less than 3 mm, more preferred less than 2 mm.

The lowest preferred thickness is determined by what is possible to achieve in the production process and also by the desired mechanical properties of the vane, since the strength of the layers decrease with decreasing thickness. Preferably, the thickness of the layer of metallic core material and the layers of wear resistant material should not be less than 0.5 mm.

It has shown that an impeller vane in which the thickness of the metallic core layers is 5 mm or less and the thickness of the wear resistant material is 15 mm or less exhibits very low wear rate and excellent mechanical properties. The total number of layers in the vane depends on the thickness of the vane, however the vane should comprise at least 5 layers, preferably at least 20, more preferred at least 70.

Preferably the inventive impeller vane is manufactured by HIP, High Isostatic Pressure.

According to one alternative, the vane is manufactured by alternating arranging layers of metallic core material 2 and layers of wear resistant material 3. This may be achieved by first lying down a sheet or strip of metallic material, e.g. steel and then arranging a layer of wear resistant material 3, such as MMC, on top of the steel sheet. The wear resistant material may be a slurry of wear resistant powder material and a binder. It may also be in the form of a sheet, such as metallic strip or tape cast material. Further sheets of steel and further layers of wear resistant material are alternating laid on top of each other until a stack of layers is achieved which constitute the complete vane structure.

According to a second alternative, the stack of alternating layers of metallic core material and wear resistant material is achieved by placing sheets of the metallic core material in upright position at predetermined distances from each other. The spaces between the sheets are subsequently filled with a slurry of wear resistant powder material and a binder or filled with a powder of wear resistant material.

The layers that are stacked could have been preformed into a suitable shape for a vane prior to stacking. In other case, the stack of alternating layers is formed into a vane preform by cutting and bending the stack, e.g. by use of pressing tools, into the form of the vane.

The vane preform is thereafter placed in a heatable pressure chamber, normally referred to as a High Isostatic Pressure-chamber (HIP-chamber). The heating chamber is pressurized with gas, typically argon that is pumped into the chamber to an isostatic pressure in excess of 500 bar. The chamber is heated to a temperature below the melting point of the metallic materials in the vane preform, e.g. 50-500°C below the melting point of the material with the lowest melting point or any phase that can form by a reaction between the materials in the vane. Typically, the vane preform is heated for a period of 1 ― 3 hours depending on the materials used and the size of the vane.

Due to the elevated pressure and temperature the layers of metallic core material 2 and the layers of wear resistant material 3 deform plastically and bond metallurgically through various diffusion processes into a dense, coherent article. In metallurgic bonding, metallic surfaces bond together flawlessly with an interface that is free of defects such as oxides, inclusions or other contaminants. Two metallic elements that are bound together metallurgically will therefore form an integral body.

After HIP-ing the finished impeller vane may be attached to preformed impeller discs so that a functional impeller is achieved. It is possible to attach the vane releasable to the impeller discs, for example with screws, so that the vane can be replaced when worn out.

According to a second alternative, the vane preform is placed in a capsule of mild steel. The capsule have been designed so that it its contour defines the form of the impeller discs. The capsule is filled with metallic powder, such as steel powder, and is thereafter subjected to HIP as described above. During HIP the metal powder particles bond metallurgically and form the discs, the layers of metallic core material and wear resistant material bond metallurgically to form the vane and the discs and the vanes bond metallurgically so that a functional impeller is achieved.

According to a third alternative, one or several vane preforms are attached to preformed impeller discs, typically made of steel e.g. by casting or machining. The discs may for example comprise slots for accommodating the side surfaces of the vane. The arrangement of impeller discs and preformed vanes are thereafter subjected to HIP as described above so that the layers of metallic core material 2 and the layers of wear resistant material 3 in the vane bond metallurgical to each other and to the impeller discs. The metallurgical bond between vanes and discs provides for a very strong impeller.

## Claims

1. An impeller vane (10) having a leading edge (11) and a trailing edge (12) wherein said vane (10) comprises at least a first metallic core material and at least a first wear resistant material, wherein the hardness of said at least first wear resistant material exceeds the hardness of said at least first metallic core material, **characterized in that** said impeller vane (10) consists of a plurality of layers of said at least first metallic core material (2) and said at least first wear resistant material (3), wherein said layers (2, 3) extend from the leading edge (11) to the trailing edge (12) of the impeller and are arranged alternating throughout the cross section of the vane (10).

2. The Impeller vane (10) according to claim 1, wherein the layers of said at least first metallic core material (2) have a thickness of 5 mm or less, preferably 3 mm or less, more preferred 2 mm or less.

3. The Impeller vane (10) according to claims 1 or 2, wherein the layers of said at least first wear resistant material (3) have a thickness of 15 mm or less, preferably 10 mm or less, more preferred 2 mm or less.

4. The impeller vane (10) according to any preceding claims, wherein said impeller vane (10) consists of at least 5 layers, preferably at least 20 layers, more preferred at least 70 layers.

5. The impeller vane (10) according to any preceding claim, comprising layers of further metallic core materials and/or layers of further wear resistant materials.

6. The impeller vane (10) according to any of the preceding claims, wherein said at least first metallic core material is selected from the group consisting of nickel-base alloys, low carbon cobalt-base alloys and iron-base alloys.

7. The impeller vane (10) according to any of the preceding claims, wherein said at least first wear resistant material is selected from the group consisting of cemented carbide, high carbon cobalt-base alloys and metal matrix composite.

8. Impeller (100) comprising at least one impeller vane (10) according to any of claims 1 ― 7.

9. A method for manufacturing an impeller vane (10) according to any of claims 1 ― 7, comprising the steps of:
- alternating arranging a plurality of layers of at least a first metallic core material (2) and a at least a first wear resistant material (3);
- forming said layers (2, 3) to an impeller vane preform;
- subjecting said impeller vane preform to a High Isostatic Pressure-process (HIP) for a predetermined time at a predetermined pressure and predetermined temperature so that the layers of said at least first metallic core material (2) and said at least first wear resistant material (3) bond metallurgically.

10. A method for manufacturing an impeller (100) comprising an impeller vane (10) according to any of claims 1 -7, comprising the steps of
- alternating arranging a plurality of layers of at least a first metallic core material (2) and at least a first wear resistant material (3);
- forming said layers (2, 3) to at least one impeller vane preform;
- providing a front impeller disc (110) and a rear impeller disc (120);
- metallurgically bonding, in a High Isostatic Pressure-process (HIP), the layers of said at least first metallic core material (2) and said at first wear resistant material (3) of said at least one vane preform to each other and to the front impeller disc (110) and a rear impeller disc (120).

11. The method according to claim 10, wherein the front impeller disc (110) and the rear impeller disc (120) are pre-manufactured.

12. The method according to claim 10, comprising the steps of:
- arranging said at least one impeller vane preform in a capsule that defines the shape of the front impeller disc (110) and a rear impeller disc (120);
- filling said capsule with metallic powder;
- metallurgically bonding, in a High Isostatic Pressure-process (HIP), said metallic powder in the capsule into an impeller front disc (110) and an impeller rear disc (120) and simultaneously;
- metallurgically bonding said first metallic core material (2) and said first wear resistant material (3) of said at least one impeller vane preform to each other and to the front impeller disc (110) and a rear impeller disc (120).
